# EUROPÄISCHE PATENTSCHRIFT

(11) **EP 1 650 461 B1**
(45) Veröffentlichungstag und Bekanntmachung des Hinweises auf die Patenterteilung: **11.07.2007**
(21) Anmeldenummer: 04025069.8
(22) Anmeldetag: 21.10.2004
(51) Int. Cl.: F16D 65/12

(54) **Bremsscheibenanordnung**
Brake disc arrangement
Assemblage de disque de frein

(43) Veröffentlichungstag der Anmeldung: 26.04.2006
(73) Patentinhaber: Weiss, Wolfgang, 85521 Ottobrunn (DE)
(72) Erfinder: Weiss, Wolfgang, 85521 Ottobrunn (DE)
(74) Vertreter: Schlimme, Wolfram

(56) Entgegenhaltungen:
- EP-A- 0 860 626
- EP-A- 0 987 462
- GB-A- 2 108 238

## Beschreibung

Die Erfindung betrifft eine geteilte Bremsscheibenanordnung mit einer Bremsflächen aufweisenden Bremsscheibe und einem Bremsscheibenträger, der mit der Bremsscheibe drehfest verbunden und durch eine Schraubverbindung fixiert ist, wobei der Bremsscheibenträger und die Bremsscheibe zur Kompensation von unterschiedlichen Wärmeausdehnungen in Radialrichtung relativ zueinander bewegbar gelagert sind. So eine Bremsscheibe geht z.B. aus GB-A-2 108 238 hervor.

Insbesondere aus dem Motorsport und von Straßensportwagen sind geteilte Bremsscheibenanordnungen bekannt, bei denen die Bremsscheibe aus einem äußerst wärmefesten und abriebfesten Material besteht, welches zum Beispiel einen Kohlefaser-Werkstoff aufweist, und wobei der Bremsscheibenträger aus einem leichten Metall, zum Beispiel Aluminium, gefertigt ist.

Da die Werkstoffe der Bremsscheibe und des Bremsscheibenträgers unterschiedliche Wärmeausdehnungskoeffizienten aufweisen und da die an der Bremsscheibenanordnung im Betrieb auftretenden Temperaturschwankungen mehrere Hundert Grad Celsius aufweisen können, dehnen sich Bremsscheibe und Bremsscheibenträger im Betrieb unterschiedlich aus. Diese unterschiedliche Wärmeausdehnung erfordert es, daß die Verbindung zwischen Bremsscheibenträger und Bremsscheibe eine relative Ausdehnung dieser beiden Teile zueinander gestattet.

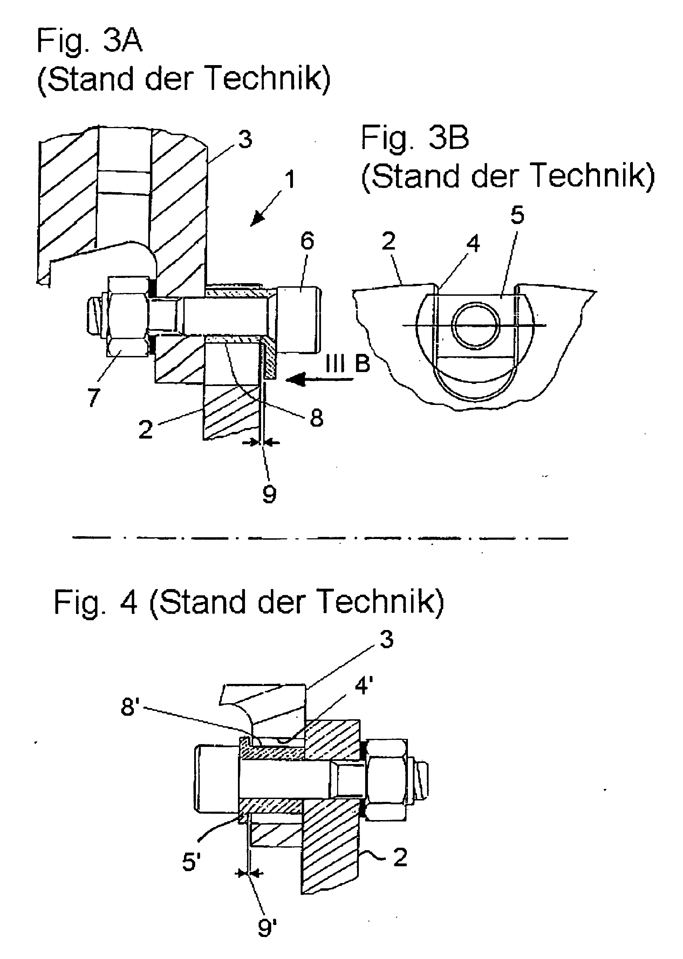

Hierzu ist es entweder möglich, den Bremsscheibenträger schwimmend an der Bremsscheibe oder die Bremsscheibe schwimmend am Bremsscheibenträger zu befestigen. Diese beiden bekannten Maßnahmen sind in den Fig. 3a, 3b und 4 dargestellt.

Die Fig. 3a und 3b zeigen eine bekannte, um eine Drehachse A rotierbare geteilte Bremsscheibenanordnung 1 mit einer schwimmenden Lagerung des Bremsscheibenträgers 2 an der Bremsscheibe 3, wobei der Bremsscheibenträger 2 über seinen Umfang mit U-förmigen Radialausnehmungen 4 versehen ist, in welche jeweils eine Gleitbuchse 5 radial verschiebbar eingesetzt ist. Eine Schraube 6 ist durch eine Bohrung der Gleitbuchse 5 und durch eine Bohrung in der Bremsscheibe 3 hindurchgeführt und mittels einer Mutter 7 gegen die Bremsscheibe 3 verschraubt. Die Gleitbuchse 5 weist einen Aufnahmeabschnitt 8 für den Bremsscheibenträger 2 auf, der geringfügig breiter ist, als die Dicke des Bremsscheibenträgers 2 (im kalten Zustand), so daß hierdurch ein Spiel 9 für eine Axialausdehnung geschaffen wird.

In der in Fig. 4 dargestellten alternativen bekannten Ausführungsform ist in der Bremsscheibe 3 ein sich radial erstreckendes Langloch 4' zur Aufnahme einer Gleitbuchse 5' vorgesehen. Bei dieser Lösung ist die radiale Relativbewegung zwischen Bremsscheibenträger 2 und Bremsscheibe 3 durch das Langloch 4' in der Bremsscheibe 3 gewährleistet. Auch hier ist der Aufnahmeabschnitt 8' der Führungsbuchse 5' für die Bremsscheibe 3 geringfügig größer als die Dicke der Bremsscheibe 3 im Bereich des Langlochs 4' (im kalten Zustand), so daß auch hier ein Spiel 9' für eine axiale Wärmeausdehnung vorgesehen ist.

Insbesondere das zur axialen Wärmeausdehnung vorgesehene Spiel führt im Betrieb zu Verschleißerscheinungen, da das Spiel im Betrieb nicht nur eine Wärmeausdehnung ermöglicht, sondern außerdem bei niedrigen Temperaturen eine Relativbewegung zwischen der Führungsbuchse 5 beziehungsweise 5' und dem Bremsscheibenträger 2 beziehungsweise der Bremsscheibe 3 zuläßt.

Ziel der vorliegenden Erfindung ist es daher, eine gattungsgemäße geteilte Bremsscheibenanordnung anzugeben, die bei spielfreier oder im Spiel zumindest deutlich reduzierter Verbindung zwischen dem Bremsscheibenträger und der Bremsscheibe trotzdem eine unterschiedliche Wärmeausdehnung zuläßt.

Diese Aufgabe wird gemäß dem kennzeichnenden Teil des Patentanspruchs 1 gelöst.

Das Vorsehen von zumindest einer konischen Fläche im Bereich des Auflagers der Schraubverbindung auf der Bremsscheibe führt dazu, daß bei einer radialen Relativbewegung von Bremsscheibe und Bremsscheibenträger.und damit auch der Schraubverbindung aufgrund unterschiedlicher Wärmeausdehnungskoeffizienten von Bremsscheibe und Bremsscheibenträger das bremsscheibenseitige Auflager der Schraubverbindung in Radialrichtung entlang der konischen Fläche wandert. Dadurch verändert sich auch der axiale Abstand zwischen den Auflagern der Schraubverbindung, so daß auch die axiale Wärmeausdehnung von Bremsscheibe und Bremsscheibenträger kompensiert wird. Die Vorspannung der Schraubverbindung in Schraubenlängsrichtung bleibt damit auch bei Wärmeausdehnung konstant.

Vorzugsweise ist die Schraubverbindung durch eine Spannschraube gebildet, die den Bremsscheibenträger und die Bremsscheibe durchdringt. Bei dieser Ausgestaltung können sich der Bremsscheibenträger und die Bremsscheibe frei entlang des Schraubenschafts in Axialrichtung bewegen.

Weiter vorzugsweise ist auf der vom Bremsscheibenträger axial abgewandten Seite der Bremsscheibe ein Spannring vorgesehen und der Bremsscheibenträger ist durch Spannschrauben mit dem Spannring verbunden, wobei die Bremsscheibe zwischen dem Bremsscheibenträger und dem Spannring eingespannt ist. Ein derartiger Spannring verteilt den durch die Spannschrauben aufgebrachten Druck auf den vollen Umfang des Bremsscheibenträgers und reduziert so lokale Druckspitzen. Zudem unterliegt auch der Spannring einer entsprechenden Radialausdehnung bei Erwärmung.

In bevorzugter Weise sind der Bremsscheibenträger, der Spannring und die Schrauben aus demselben Material gefertigt. Dies hat den Vorteil, daß der Wärmeausdehnungskoeffizient dieser Teile derselbe ist, wodurch die wärmebedingte Ausdehnung von Bremsscheibenträger, Schrauben und Spannring eine Parallelverschiebung der Schraubverbindung bei Erwärmung beziehungsweise Abkühlung bewirkt.

In einer besonders bevorzugten Ausführungsform ist die Ausbildung einer konischen Ringfläche in jenem Bereich der Bremsscheibe vorgesehen, auf dem der Spannring aufliegt. Durch die Verteilung des vom Spannring auf die Bremsscheibe ausgeübten Drucks auf den gesamten Umfangsbereich des Spannrings wird eine im wesentlichen gleiche Flächenpressung zwischen Spannring und konisch ausgebildetem Bereich der Bremsscheibe bewirkt, so daß die bei der Wärmeausdehnung gewünschte radiale Relativbewegung zwischen Spannring und Bremsscheibe möglichst gleichmäßig und ohne größere lokal unterschiedliche Reibungswiderstände erfolgt.

Alternativ oder zusätzlich kann der Bereich des Spannrings, auf dem die Bremsscheibe aufliegt, auch als konische Ringfläche ausgebildet sein.

Die Neigung der konische Fläche bezüglich der Drehachse der Bremsscheibenanordnung ist vorzugsweise definiert durch eine Verbindungsgerade zwischen dem Schnittpunkt der Berührungsebene von Bremsscheibenträger und Bremsscheibe mit der Drehachse und dem Schnittpunkt der Achse der Spannschraube mit der konischen Fläche.

Eine besonders vorteilhafte Weiterbildung der erfindungsgemäßen geteilten Bremsscheibenanordnung zeichnet sich dadurch aus, daß die Bremsscheibe mit einer ersten radialen Stirnverzahnung ausgebildet ist, daß der Bremsscheibenträger mit einer zweiten Stirnverzahnung ausgebildet ist und daß die erste Stirnverzahnung und die zweite Stirnverzahnung ineinander greifen, um ein Drehmoment von der Bremsscheibe auf den Bremsscheibenträger übertragen zu können. Durch diese Verzahnungsverbindung wird beim Bremsen eine optimale Drehmomentübertragung von der Bremsscheibe auf den Bremsscheibenträger erzielt, ohne daß die Schraubverbindung Teil des Drehmomentflusses ist, so daß also keine Scherkräfte auf die Schraubverbindung einwirken.

In einer besonders bevorzugten Ausgestaltungsform ist die jeweilige Stirnverzahnung eine Plan-Kerbverzahnung mit radial konisch verlaufenden Zähnen. Derartige Plan-Kerbverzahnungen sind als Hirth-Verzahnung oder als Voith-Hirth-Verzahnung bekannt und beispielhaft bei Niemann (Niemann, G.: Maschinenelemente Band I, 2. Auflage, Berlin, Heidelberg, New York 1975, S. 381 - 383) beschrieben. Bei dieser Art Verzahnung werden die bei miteinander kämmenden Verzahnungen zusammengefügten Teile automatisch zentriert.

Vorzugsweise sind jeweils eine Mehrzahl von Zähnen zu einem Blockzahn zusammengefaßt. Dieses Vorsehen von großen Blockzähnen gegenüber den bei einer klassischen Hirth-Verzahnung vorgesehenen Einzelzähnen vereinfacht nicht nur die Fertigung und senkt damit die Fertigungskosten, sondern erhöht zudem die Festigkeit der Verzahnung gegenüber dem zu übertragenden Drehmoment.

Dabei ist es von besonderem Vorteil, wenn die Neigung der konischen Fläche bezüglich der Drehachse der Bremsscheibenanordnung durch eine Verbindungsgerade zwischen dem Mittelpunkt der miteinander kämmenden Stirnverzahnungen und dem Schnittpunkt der Achse der Spannschraube mit der konischen Fläche definiert ist.

Die Erfindung wird nachfolgend anhand eines Beispiels unter Bezugnahme auf die Zeichnung näher erläutert; in dieser zeigt:
- Fig. 1: einen Längsschnitt durch eine erfindungsgemäße Bremsscheibenanordnung;
- Fig. 2: eine Seitenansicht der erfindungsgemäßen Bremsscheibenanordnung in Richtung des Pfeils II in Fig. 1 mit teilweise weggeschnittenem Bremsscheibenträger und ohne Rad;
- Fig. 3a: einen Längsschnitt durch einen Ausschnitt einer teilbaren Bremsscheibenanordnung nach dem Stand der Technik,
- Fig. 3b: eine Seitenansicht der bekannten Bremsscheibenanordnung nach Fig. 3a in Richtung des Pfeils IIIB und
- Fig. 4: einen Längsschnitt durch einen Ausschnitt einer anderen bekannten geteilten Bremsscheibenanordnung.

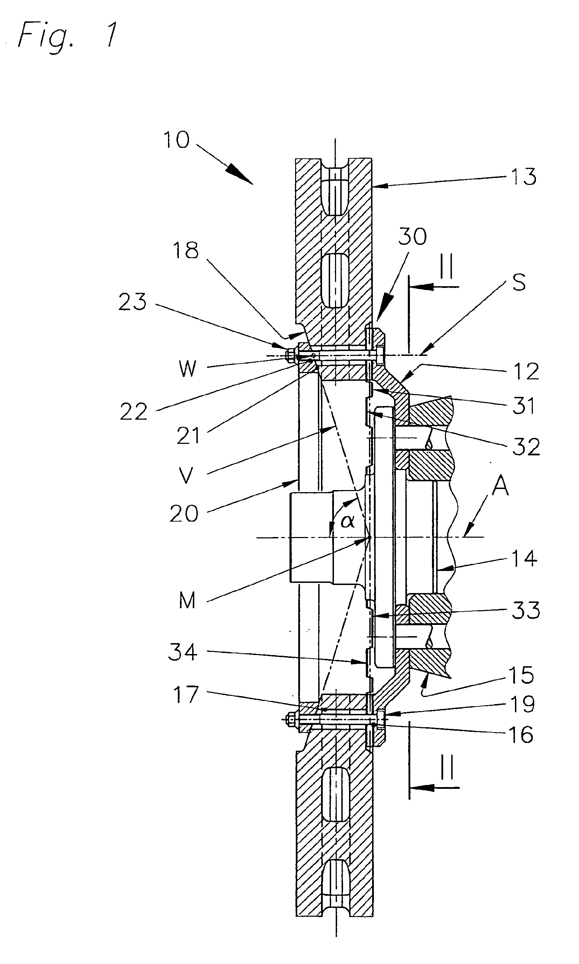

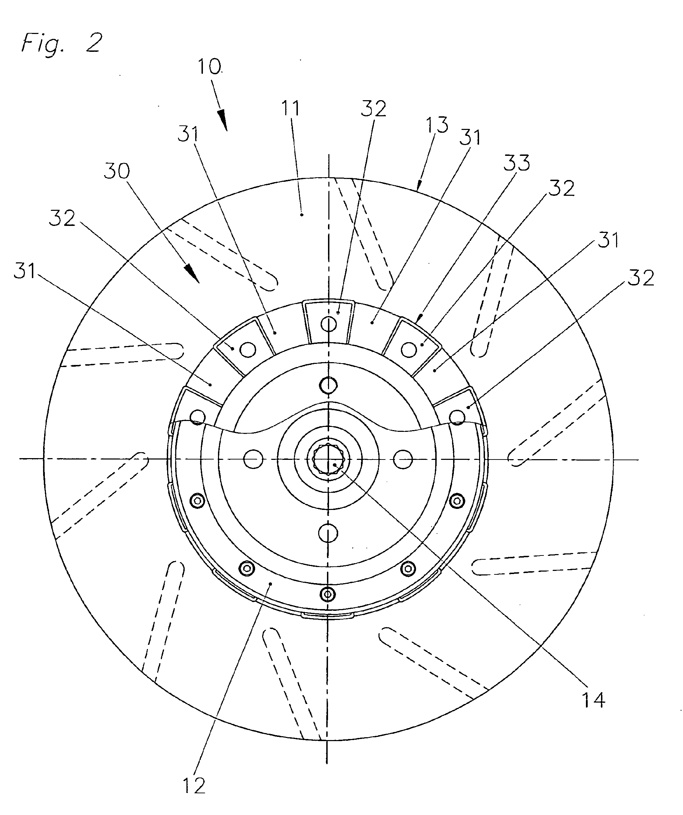

In Fig. 1 ist eine in Radialrichtung achsparallel geschnittene erfindungsgemäße Bremsscheibenanordnung 10 mit Bremsflächen 11 (Fig. 2) dargestellt. Die Bremsscheibenanordnung 10 ist als geteilte Bremsscheibenanordnung mit einem Bremsscheibenträger 12 und einer Bremsscheibe 13 ausgebildet. Die geteilte Bremsscheibenanordnung 10 ist durch den Bremsscheibenträger 12 an einer Radnabe 14 zwischen dieser und einem Rad 15 befestigt. Die Radnabe 14 und die Bremsscheibenanordnung 10 drehen um eine gemeinsame Drehachse A.

Der Bremsscheibenträger 12 und die Bremsscheibe 13 sind an den einander zugewandten Stirnseiten jeweils mit einer Stirnverzahnung 33, 34 versehen, die eine Wellenkupplung 30 bilden und als ringförmige Plan-Kerbverzahnung ausgebildet sind, die weiter unten noch näher beschrieben werden wird. Über die Wellenkupplung 30 stehen der Bremsscheibenträger 12 und die Bremsscheibe 13 miteinander in drehfestem Eingriff, wobei die als Plan-Kerbverzahnung ausgebildete Wellenkupplung 30 den Bremsscheibenträger 12 und die Bremsscheibe 13 zueinander zentriert und eine radiale Relativbewegung aufgrund unterschiedlicher Wärmeausdehnungen des Bremsscheibenträgers 12 und der Bremsscheibe 13 zuläßt.

Im Bereich der ringförmigen Stirnverzahnungen 33, 34 sind der Bremsscheibenträger 12 und die Bremsscheibe 13 mit über den Umfang voneinander beabstandeten achsparallelen Bohrungen 16, 17 zur Aufnahme jeweils einer Spannschraube 19 versehen. Die Bohrungen 17 in der Bremsscheibe 13 sind dabei als Langlöcher ausgebildet, die sich in Radialrichtung ausdehnen.

Auf der von der Wellenkupplung 30 abgewandten Seite ist die Bremsscheibe 13 mit einer konischen Fläche 18 versehen, die ebenfalls ringförmig verläuft und die die Dicke der Bremsscheibe 13 radial einwärts zur Achse A hin verjüngt.

Ein Spannring 20 liegt mit einer angepaßt konischen Fläche 21 auf der konischen Fläche 18 der Bremsscheibe 13 auf. Der Spannring 20 ist mit einer der Anzahl der Bohrungen 16, 17 entsprechenden Anzahl von Gewindebohrungen 22 versehen, in welche die Spannschrauben 19, die sich mit ihrem Schraubenkopf im Bremsscheibenträger 12 abstützen, einschraubbar sind. Eine Kontermutter 23 ist auf den aus der Gewindebohrung 22 des Spannrings 20 heraustretenden Gewindeabschnitt der jeweiligen Spannschraube 19 aufgeschraubt, um eine beim Festschrauben der Spannschraube 19 vorgegebene Vorspannung in Schraubenlängsrichtung zu fixieren. Die Bremsscheibe 13 ist auf diese Weise zwischen dem Bremsscheibenträger 12 und dem Spannring 20 eingespannt.

Die Neigung der konischen Flächen 18 und 21 bezüglich der Drehachse A der Bremsscheibenanordnung 10 ist definiert durch eine Verbindungsgerade V zwischen dem auf der Drehachse A gelegenen Mittelpunkt M der als Plan-Kerbverzahnung ausgebildeten Stirnverzahnung 33 der Bremsscheibe 13 und dem Schnittpunkt W der Achse S der Spannschraube 19 mit der konischen Fläche 18 beziehungsweise 21. Die Achse S der Spannschraube 19 verläuft dabei durch den Mittelpunkt der Bohrung 16 im Bremsscheibenträger 12 und durch den Mittelpunkt der zugeordneten Gewindebohrung 22 im Spannring 20. Die Verbindungsgerade V und die Drehachse A bestimmen so den Spitzenwinkel α des von den konischen Flächen 18, 21 bestimmten Konus'.

Die Stirnverzahnungen 33, 34 der Wellenkupplung 30 sind jeweils auf der Basis einer sogenannten Hirth-Verzahnung oder Voith-Hirth-Verzahnung ausgebildet. Dabei erstrecken sich die Zähne von dem auf der Drehachse A gelegenen Mittelpunkt M strahlenförmig radial nach außen (Fig. 2) und sind konisch ausgebildet, so daß sie vom gemeinsamen Ursprung im Mittelpunkt M radial nach außen konisch verlaufen, also in Richtung der Drehachse A immer dicker werden (Fig. 1).

Die im gezeigten Beispiel vorgesehenen Stirnverzahnungen 33, 34 sind jedoch nicht wie eine klassische Hirth-Verzahnung mit spitzen Zähnen versehen, sondern jeweils als Blockverzahnung ausgebildet, wie an den einzelnen abgeflachten Zähnen 31 und Zahngründen 32 in Fig. 1 und auch in Fig. 2 zu sehen ist. Diese Blockverzahnung kann man sich vorstellen als Hirth-Verzahnung, bei der die spitzen Zähne und die spitzen Zahngründe jeweils abgeflacht sind.

Aufgrund des strahlenförmigen radialen und konischen Verlaufs der Zähne 31 und der Zahngründe 32 der Plan-Kerbverzahnung sind der Bremsscheibenträger 12 und die Bremsscheibe 13 im montierten Zustand automatisch um die Drehachse A zentriert.

Bremsscheibenanordnugen erreichen beim Betrieb in Landfahrzeugen oder Luftfahrzeugen, oder auch in stationären Anwendungen, zum Teil sehr hohe Temperaturen (bei Rennwagen bis zu 1.000° C Bremsflächentemperatur), so daß nicht unbedeutende Wärmeausdehnungen der einzelnen Teile der Bremsscheibenanordnung 10 stattfinden. Bestehen bei einer geteilten Bremsscheibenanordnung, wie im Fall der Erfindung, die Bremsscheibe und der Bremsscheibenträger aus unterschiedlichen Werkstoffen, so dehnen sie sich auch unterschiedlich aus. Dabei kommt es zu einer Relativbewegung der ineinander kämmenden Stirnverzahnungen 33, 34 der Wellenkupplung 30 in Radialrichtung.

Die mit dieser Relativbewegung in Radialrichtung einhergehende Verschiebung bewirkt ebenfalls eine Radialverschiebung der Spannschrauben 19 in den Langlöchern 17. Wenn, wie im vorliegenden Beispiel, der Bremsscheibenträger 12, der Spannring 20 und die Spannschraube 19 aus demselben Werkstoff gefertigt sind, so dehnt sich der Spannring 20 in gleichem Maße radial aus wie der Bremsscheibenträger 12, so daß die Achse S der Spannschraube 19 bei der Radialverschiebung der Spannschraube 19 parallel zur Drehachse A bleibt. Da sich dabei der Spannring 20 mit seiner konischen Fläche 21 auf der konischen Fläche 18 der Bremsscheibe 13 radial auswärts bewegt, vergrößert sich der Axialabstand zwischen dem Spannring 20 und dem Bremsscheibenträger 12. Diese Abstandsvergrößerung entspricht der Wärmeausdehnung der Spannschrauben 19 in Axialrichtung, so daß die Vorspannung innerhalb der jeweiligen Spannschraube 19 während der wärmeausdehnungs-bedingten Radialverlagerung konstant bleibt ; es entsteht also kein unerwünschtes Spiel, weder im warmen noch im kalten Zustand der Bremsscheibenanordnung 10. Auf diese Weise wird eine über einen großen Temperaturbereich spielfreie Befestigung einer Bremsscheibe 13 an einem Bremsscheibenträger 12 einer geteilten Bremsscheibenanordnung 10 aus unterschiedlichen Werkstoffen geschaffen.

Die Erfindung ist nicht auf das obige Ausführungsbeispiel beschränkt, das lediglich der allgemeinen Erläuterung des Kerngedankens der Erfindung dient. Im Rahmen des Schutzumfangs kann die erfindungsgemäße Vorrichtung vielmehr auch andere als die oben beschriebenen Ausgestaltungsformen annehmen. Die Vorrichtung kann hierbei insbesondere Merkmale aufweisen, die eine Kombination aus den jeweiligen Einzelmerkmalen der Ansprüche darstellen.

Bezugszeichen in den Ansprüchen, der Beschreibung und den Zeichnungen dienen lediglich dem besseren Verständnis der Erfindung und sollen den Schutzumfang nicht einschränken.

## Patentansprüche

1. Geteilte Bremsscheibenanordnung mit
- einer Bremsflächen (11) aufweisenden Bremsscheibe (13) und
- einem Bremsscheibenträger (12), der mit der Bremsscheibe (13) drehfest verbunden und durch eine Schraubverbindung fixiert ist,
- wobei der Bremsscheibenträger (12) und die Bremsscheibe (13) zur Kompensation von unterschiedlichen Wärmeausdehnungen in Radialrichtung relativ zueinander bewegbar gelagert sind,
- wobei im Bereich des Auflagers der Schraubverbindung auf der Bremsscheibe (13) zumindest eine konische Fläche (18; 21) vorgesehen ist,
**dadurch gekennzeichnet,**
- **daß** die Bremsscheibe (13) mit einer ersten radialen Stirnverzahnung (33) ausgebildet ist,
- **daß** der Bremsscheibenträger (12) mit einer zweiten radialen Stirnverzahnung (34) ausgebildet ist und
- **daß** die erste Stirnverzahnung (33) und die zweite Stirnverzahnung (34) ineinander greifen und eine Wellenkupplung (30) bilden, um ein Drehmoment von der Bremsscheibe (13) auf den Bremsscheibenträger (12) übertragen zu können.

2. Geteilte Bremsscheibenanordnung nach Anspruch 1,
**dadurch gekennzeichnet,**
**daß** die jeweilige Stirnverzahnung (33, 34) eine Plan-Kerbverzahnung mit radial konisch verlaufenden Zähnen ist.

3. Geteilte Bremsscheibenanordnung nach Anspruch 2,
**dadurch gekennzeichnet,**
**daß** jeweils eine Mehrzahl von Zähnen zu einem Blockzahn (31) zusammengefaßt sind.

4. Geteilte Bremsscheibenanordnung nach Anspruch 2 oder 3,
**dadurch gekennzeichnet,**
**daß** die Neigung der konischen Fläche (18; 21) bezüglich der Drehachse (A) der Bremsscheibenanordnung (10) durch eine Verbindungsgerade (V) zwischen dem Mittelpunkt (M) der miteinander kämmenden Stirnverzahnungen (33, 34) und dem Schnittpunkt (W) der Achse (S) der Spannschraube (19) mit der konischen Fläche (18; 21) definiert ist.

5. Geteilte Bremsscheibenanordung nach einem der vorhergehenden Ansprüche,
**dadurch gekennzeichnet,**
**daß** der Bereich der Bremsscheibe (13), der das Auflager für die Schraubverbindung bildet, als konische Fläche (18) ausgebildet ist.

6. Geteilte Bremsscheibenanordnung nach Anspruch 5, **dadurch gekennzeichnet,**
**daß** die Schraubverbindung durch zumindest eine Spannschraube (19) gebildet ist, die den Bremsscheibenträger (12) und die Bremsscheibe (13) durchdringt.

7. Geteilte Bremsscheibenanordnung nach einem der vorhergehenden Ansprüche,
**dadurch gekennzeichnet,**
**daß** auf der vom Bremsscheibenträger (12) axial abgewandten Seite der Bremsscheibe (13) ein Spannring (20) vorgesehen ist und daß der Bremsscheibenträger (12) durch Spannschrauben (19) mit dem Spannring (20) verbunden ist, wobei die Bremsscheibe (13) zwischen dem Bremsscheibenträger (12) und dem Spannring (20) eingespannt ist.

8. Geteilte Bremsscheibenanordnung nach Anspruch 7,
**dadurch gekennzeichnet,**
**daß** der Bremsscheibenträger (12), der Spannring (20) und die Schrauben (19) aus demselben Material, gefertigt sind.

9. Geteilte Bremsscheibenanordnung nach Anspruch 7 oder 8,
**dadurch gekennzeichnet,**
**daß** der Bereich der Bremsscheibe (13), auf dem der Spannring (20) aufliegt, als konische Ringfläche (18) ausgebildet ist.

10. Geteilte Bremsscheibenanordnung nach Anspruch 6, 7 oder 8,
**dadurch gekennzeichnet,**
**daß** der Bereich des Spannrings (20), auf dem die Bremsscheibe (13) aufliegt, als konische Ringfläche (21) ausgebildet ist.

11. Geteilte Bremsscheibenanordnung nach einem der vorhergehenden Ansprüche,
**dadurch gekennzeichnet,**
**daß** die Neigung der konischen Fläche (18; 21) bezüglich der Drehachse (A) der Bremsscheibenanordnung (10) durch eine Verbindungsgerade (V) zwischen dem Schnittpunkt der Berührungsebene von Bremsscheibenträger (12) und Bremsscheibe (13) mit der Drehachse (A) und dem Schnittpunkt (W) der Achse (S) der Spannschraube (19) mit der konischen Fläche (18; 21) definiert ist.

## Claims

1. A divided disk brake arrangement having
- a braking disk (13) with braking surfaces (11), and
- a disk holder (12), which is connected to the braking disk (13) in a torsion-proof manner and secured by a screw connection,
- wherein the disk holder (12) and the braking disk (13) are mounted so that they can move relative to each other in a radial direction to compensate for the different thermal expansions,
- wherein at least one conical surface (18; 21) is provided in a region of the braking disk (13) engaged by the screw connection,
**characterized in that**
- the braking disk (13) includes a first radial spur gearing (33),
- the disk holder (12) includes a second radial spur gearing (34), and
- the first spur gearing (33) and the second spur gearing (34) mesh with each other and form a shaft coupling (30) in order to allow transmitting a torque from the braking disk (13) to the disk holder (12).

2. A divided disk brake arrangement according to claim 1, **characterized in that** the respective spur gearing (33, 34) comprises a planar, grooved spur gearing with radially conically extending teeth.

3. A divided disk brake arrangement according to claim 2, **characterized in that** a plurality of teeth of each planar spur gearing is grouped into block teeth (31).

4. A divided disk brake arrangement according to claims 2 or 3, **characterized in that** an angular inclination of the conical surface (18; 21) relative to a rotational axis (A) of the disk brake arrangement (10) is defined by a line (V) extending from a midpoint (M) of the intermeshing spur gearings (33, 34) to the point (W) where the axis (S) of the tensioning screw (19) intersects the conical surface (18; 21).

5. A divided disk brake arrangement according to one of the preceding claims, **characterized in that** the region of the braking disk (13) forming the bearing support for the screw connection defines the conical surface (18).

6. A divided disk brake arrangement according to claim 5, **characterized in that** the screw connection is formed by at least one tensioning screw (19) which extends through the disk holder (12) and the braking disk (13).

7. A divided disk brake arrangement according to one of the preceding claims, **characterized in that** a tensioning ring (20) is provided on a side of the braking disk (13) facing axially away from the disk holder (12) and the disk holder (12) is connected to the tensioning ring (20) by tensioning screws (19), the braking disk (13) being clamped between the disk holder (12) and the tensioning ring (20).

8. A divided disk brake arrangement according to claim 7, **characterized in that** the disk brake holder (12), the tensioning ring (20) and the tensioning screws (19) are made from the same material.

9. A divided disk brake arrangement according to claim 7 or 8, **characterized in that** the region of the braking disk (13) against which the tensioning ring (20) lies defines the conical annular surface (18).

10. A divided disk brake arrangement according to claim 6, 7 or 8, **characterized in that** a region of the tensioning ring (20) against which the braking disk (13) lies defines the conical annular surface (21).

11. A divided disk brake arrangement according to one of the preceding claims, **characterized in that** an angle of inclination of the conical surface (18; 21) relative to the rotational axis (A) of the disk brake arrangement (10) is defined by a line (V) extending from a point of intersection of a plane on which the disk holder (12) and the braking disk (13) touch and the rotational axis (A) to the point (W) where the axis (6) of the tensioning screw (19) intersects the conical surface (18; 21).

## Revendications

1. Agencement subdivisé de disque de frein, comportant
- un disque de frein (13) présentant des surfaces de freinage (11), et
- un porte-disque de frein (12) qui est relié solidairement en rotation au disque de frein (13) et qui est fixé par une liaison vissée,
- le porte-disque de frein (12) et le disque de frein (13) étant montés avec faculté de déplacement en direction radiale l'un par rapport à l'autre pour compenser des dilatations thermiques différentes,
- au moins une surface conique (18 ; 21) étant prévue dans la zone d'appui de la liaison vissée sur le disque de frein (13),
**caractérisé en ce que**
- le disque de frein (13) est réalisé avec une première denture frontale radiale (33),
- le porte-disque de frein (12) est réalisé avec une seconde denture frontale radiale (34), et
- la première denture frontale (33) et la seconde denture frontale (34) s'engagent l'une dans l'autre et forment un accouplement d'arbre (30) pour pouvoir transmettre un couple de rotation depuis le disque de frein (13) au porte-disque de frein (12).

2. Agencement subdivisé de disque de frein selon la revendication 1,
**caractérisé en ce que**
la denture frontale respective (33, 34) est une denture entaillée plane munie de dents qui s'étendent radialement en forme conique.

3. Agencement subdivisé de disque de frein selon la revendication 2,
**caractérisé en ce que**
une pluralité de dents sont regroupées en un bloc denté (31).

4. Agencement subdivisé de disque de frein selon la revendication 2 ou 3,
**caractérisé en ce que**
l'inclinaison de la surface conique (18 ; 21) par rapport à l'axe de rotation (A) de l'agencement de disque de frein (10) est définie par une droite de liaison (V) entre le centre (M) des dentures frontales (33, 34) en engrènement mutuel et le point d'intersection (W) de l'axe (S) de la vis de serrage (19) avec la surface conique (18 ; 21).

5. Agencement subdivisé de disque de frein selon l'une des revendications précédentes,
**caractérisé en ce que**
la zone du disque de frein (13) qui forme l'appui pour la liaison vissée est réalisée sous forme de surface conique (18).

6. Agencement subdivisé de disque de frein selon la revendication 5,
**caractérisé en ce que**
la liaison vissée est formée par au moins une vis de serrage (19) qui traverse le porte-disque de frein (12) et le disque de frein (13).

7. Agencement subdivisé de disque de frein selon l'une des revendications précédentes,
**caractérisé en ce que**
sur le côté du disque de frein (13) axialement détourné du porte-disque de frein (12) est prévu un anneau de serrage (20), et **en ce que** le porte-disque de frein (12) est relié à l'anneau de serrage (20) par des vis de serrage (19), le disque de frein (13) étant serré entre le porte-disque de frein (12) et l'anneau de serrage (20).

8. Agencement subdivisé de disque de frein selon la revendication 7,
**caractérisé en ce que**
le porte-disque de frein (12), l'anneau de serrage (20) et les vis (19) sont fabriqués à partir du même matériau.

9. Agencement subdivisé de disque de frein selon la revendication 7 ou 8,
**caractérisé en ce que**
la zone du disque de frein (13) sur laquelle repose l'anneau de serrage (20) est réalisée sous forme de surface annulaire conique (18).

10. Agencement subdivisé de disque de frein selon la revendication 6, 7 ou 8,
**caractérisé en ce que**
la zone de l'anneau de serrage (20) sur laquelle repose le disque de frein (13) est réalisée sous forme de surface annulaire conique (21).

11. Agencement subdivisé de disque de frein selon l'une des revendications précédentes,
**caractérisé en ce que**
l'inclinaison de la surface conique (18 ; 21) par rapport à l'axe de rotation (A) de l'agencement de disque de frein (10) est définie par une droite de liaison (V) entre le point d'intersection du plan de contact du porte-disque de frein (12) et du disque de frein (13) avec l'axe de rotation (A) et le point d'intersection (W) de l'axe (S) de la vis de serrage (19) avec la surface conique (18 ; 21).
